# EUROPEAN PATENT APPLICATION

(11) **EP 1 087 329 A2**
(43) Date of publication of application: **28.03.2001**
(21) Application number: 00114102.7
(22) Date of filing: 07.07.2000
(51) Int. Cl.: G06K 13/06

(54) **Document with a region protected by a masking layer**

(30) Priority: 22.09.1999 IT MI990584 U
(71) Applicant: Mantegazza, Antonio, 20090 Opera, Milano (IT)
(72) Inventor: Mantegazza, Antonio, 20090 Opera, Milano (IT)
(74) Representative: Modiano, Guido, Dr.-Ing.

(57) **Abstract**

A document (1) having a region protected by a masking layer, comprising a backing element (2) which has secret information in at least one (3) of its regions, an optically transparent layer (5) which is superimposed on the region, and a removable masking layer (6) which covers at least the cited region. The masking layer is provided by means of thermochromatic inks which are adapted to change color at the temperature of the human body.

## Description

The present invention relates to a document with a region protected by a masking layer.

It is known that in many fields cards are currently used which in practice represent money and have a region in which there is a code which must be kept secret and viewed only by the end user.

Such cards, commonly known as scratch-off cards, are normally used for telephone systems and are constituted by a sheet-like element having, in one of its regions, secret information constituted by numerals masked externally by covering with an optically transparent layer above which, at least in the region that affects the secret information, there is a masking layer which can be removed by scratching or the like, so as to allow only the user to view the code.

One type of fraud normally performed on these cards consists in removing the masking layer from the card, reading the secret number, using the corresponding service, and covering the code again with a simple strip of paper which is the photocopy of the original masking region.

With this solution, the user cannot immediately check, at the time of purchase, whether the masking layer is the original one and therefore also cannot check the integrity of the document that is sold to him.

The aim of the invention is to eliminate the above drawbacks, by providing a document with a region protected by a masking layer which allows the user to immediately check, at the time of purchase, the authenticity of the document without having to resort to the use of devices of any kind.

Within the scope of the above aim, a particular object of the invention is to provide a document with a region protected by a masking layer in which any photocopying of the masking layer to replace the original renders the forgery immediately evident.

Another object of the present invention is to provide a document which allows to check its authenticity without having to remove the document from the ordinary transparent wrapper in which it is packaged.

Another object of the present invention is to provide a document with a region protected by a masking layer which allows to provide a very high level of control for the buyer, together with the possibility of an optimum level of control also for verification by competent personnel.

These and other objects which will become better apparent hereinafter are achieved by a document having a region protected by a masking layer, according to the invention, comprising a backing element which has secret information in at least one of its regions, an optically transparent layer which is superimposed on said at least one region, a removable masking layer which covers at least said region, characterized in that said masking layer is provided by means of thermochromatic inks which are adapted to change color at the temperature of the human body.

Further characteristics and advantages will become better apparent from the detailed description of a document having a region protected by a masking layer, illustrated only by way of non-limitative example in the accompanying drawings, wherein:
Figure 1 is a schematic perspective view of a document, illustrating the verification step according to the present invention;
Figure 2 is a perspective schematic view of the document, showing the optically transparent layer and the masking layer;
Figure 3 is a perspective schematic view of a document, according to a second embodiment of the invention, with a thermochromatic layer of the type that becomes transparent at the temperature of the human body.

With reference to the figures, the document having a region protected by a masking layer, according to the invention, generally designated by the reference numeral 1, comprises a backing element 2 which is advantageously constituted by a sheet-like element such as a card.

The backing element 2 has, in at least one region designated by the reference numeral 3, secret information consisting of digits 4 encoded in any way, or by any other information deemed appropriate.

An optically transparent layer 5 of the self-adhesive type is applied over the region 3, in a per se known manner, and overlaps the region 3, acting in practice as a protective element for the secret information.

A masking layer 6 of the scratch-off type, which can be removed by scratching, is applied over the optically transparent layer 5.

The important feature of the invention is constituted by the fact that the masking layer 6 is provided by means of thermochromic or thermochromatic inks, which have the particularity of changing their color reversibly or irreversibly when the temperature varies.

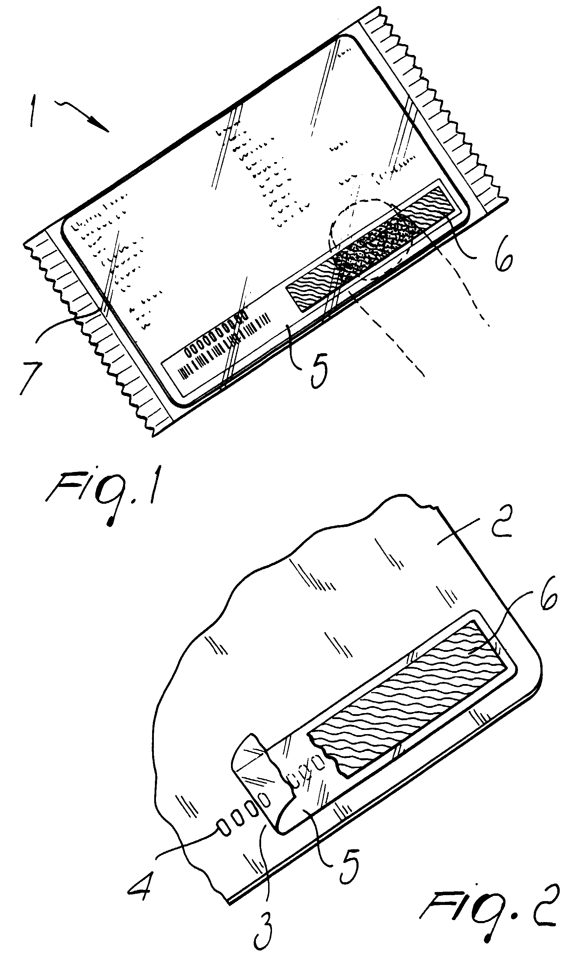

Experimental tests that have been conducted have shown that it is optimum to use a reversible thermochromic ink which changes color at the temperature of the human body, so that the user, at the time of purchase, can check the authenticity of the document simply by applying a finger, as shown schematically in Figure 1, to the document, being still contained in the conventional wrapper 7, which is optically transparent.

In this manner it is straightforward to check whether the document has been forged, without the need for machines or devices for verification.

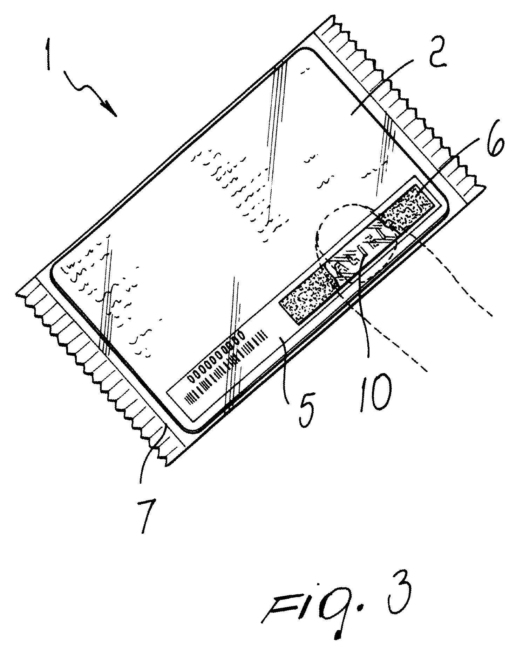

Another similar solution is shown in Figure 3; in this solution, a thermochromatic layer is applied over a masking layer, which is preferably in a single color, the thermochromatic layer having the particularity of becoming transparent at a certain temperature, which preferably corresponds to the temperature of the human body, so that by applying a finger such layer can become transparent, allowing to view from outside an indication 10 of authenticity, which can be constituted by a message of any kind.

Conceptually, it is also possible to use irreversible thermochromatic inks which change color, for example with the temperature of a photocopier, so that the attempted fraud is rendered immediately evident, since the region changes color and accordingly the document is no longer usable.

The solution adopted is particularly advantageous with respect to other possible ones, such as the use of color inks with security backgrounds which cannot be imitated perfectly by the color photocopier or by metallized surfaces, since such rapid and easy verification by the user is not possible with said inks.

Similar problems would occur by using photosensitive or iridescent inks, since the possibility of verification would be very small for the user, differently from the above described solution which, by virtue of the simple contact of the hand, allows to immediately reveal a color change which is a sign of the authenticity of the document.

In practice, the materials used, so long as they are compatible with the specific use, as well as the contingent shapes and dimensions, may be any according to requirements.

The disclosures in Italian Utility Model Application No. MI99U000584 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A document having a region protected by a masking layer, comprising a backing element (2) which has secret information in at least one (3) of its regions, an optically transparent layer (5) which is superimposed on said at least one region, a removable masking layer (6) which covers at least said region, characterized in that said masking layer (6) is provided by means of thermochromatic inks which are adapted to change color at the temperature of the human body.

2. The document having a region protected by a masking layer, comprising a backing element (2) which has secret information in at least one of its regions, an optically transparent layer (5) which is superimposed on said at least one region, a removable masking layer (6) which covers at least said region, characterized in that it comprises, on said masking layer (6), a layer provided by means of thermochromatic inks which are adapted to change color at the temperature of the human body.

3. The document according to one or more of the preceding claims, characterized in that said thermochromatic inks are of the type adapted to become optically transparent for temperature variations.

4. The document according to one or more of the preceding claims, characterized in that it comprises an authenticity message under said thermochromatic layer.

5. The document according to one or more of the preceding claims, characterized in that said thermochromatic inks provide a color change of the reversible type.

6. The document according to one or more of the preceding claims, characterized in that said thermochromatic inks provide a color change of the irreversible type.

7. The document according to one or more of the preceding claims, characterized in that said backing element (2) comprises a sheet-like element.

8. The document according to one or more of the preceding claims, characterized in that said backing element (2) is inserted in a wrapper (7) which is optically transparent at least at said at least one region (3).
